# EUROPEAN PATENT APPLICATION

(11) **EP 1 223 133 A1**
(43) Date of publication of application: **17.07.2002**
(21) Application number: 01100908.1
(22) Date of filing: 16.01.2001
(51) Int. Cl.: B65H 19/10, G01N 19/04

(54) **Adhesive tape for flying reel changes**

(71) Applicant: NITTO EUROPE N.V, 3600 Genk (BE)
(72) Inventor: Jacobs, Dirk, Nitto Europe NV, 3600 Genk (BE); Greet Bossaert, Nitto Europe NV, 3600 Genk (BE); Eever, Walter, Dr., Nitto Europe NV, 3600 Genk (BE); Kuwabara, Yutaka, Nitto Europe NV, 3600 Genk (BE)
(74) Representative: Grünecker, Kinkeldey, Stockmair & Schwanhäusser Anwaltssozietät

(57) **Abstract**

The invention concerns an adhesive tape for flying reel changes having a backing layer (1) and adhesive layers (2,3) coated on both sides of said backing layer. The adhesive tape has a cleavage means (4) provided substantially transverse to at least said backing layer (1), thereby dividing said backing layer into a first portion (1a) and a second portion (1b), wherein the one adhesive layer is not effective in the area of the second portion (1b) and the other adhesive layer is not effective in the area of the first portion (1a).

## Description

The invention relates to an adhesive tape which is used for splicing and closing of reels, in particular paper reels, and a method for changing such reels.

The conventional practice of closing a new reel, preparing same to be spliced to an old reel and actually conducting the splice is a very intensive and precise action which requires a certain skill, trained people and an amount of time which is not to be neglected. Moreover, said conventional approach is disadvantageous insofar as different types of tapes have to be used. The different tapes have to be repacked individually to maintain their properties. The tapes have to be distinctive and each type has to have its own set of properties. These can be different for the reel closing tape and for the splicing tape.

Furthermore, difficult cut-out and splice patterns such as "straight cuts, v-shape cuts or asymmetric v-shape cuts" have to be prepared. These splice patterns have to be selected according to the paper grade, the condition of the roll paper weight and the press speed used. These patterns mostly have to be strengthened with labels or tabs to increase the splice-air tightness. These tabs are die cut to break instantly after the splice has been made to release the new roll for unwinding. They are also used to hold down the outer spire during rotation to prevent air pockets being formed, which can burst the splice pattern during acceleration. The number and type of tabs have to be determined by splice speed, paper grade and pattern shape. The tabs should also not be applied too tightly because then they could break in advance. All these tapes and labels have to be positioned very accurately and have to be cut in such a way that an overlap is absolutely avoided. Overlaps can cause air tunnels, which can lead to reopening of the paper reel or may lead to splice failures caused by uneven splice patterns and too thick total splices.

The present invention concerns an adhesive tape for flying reel changes having a backing layer and adhesive layers coated on both sides of said backing layer. Such an adhesive tape is known from EP 0 831 046 A1.

EP 0 831 046 A1 further discloses that a readily splitting paper is used for the backing layer so that the backing layer breaks in a longitudinal direction when the reel is opened.

An adhesive tape of that kind combines the functions of a reel closing tape and a reel splicing tape in such a way that it does not open during acceleration, no air tunnels are formed and the splice is prepared in an easy manner which avoids difficult splice pattems.

However, a drawback of said known adhesive tape consists in that the splitting force which causes the longitudinal breakage of the backing layer depends on the material of the backing layer and is therefore set to a predetermined value.

It is therefore an object of the present invention to provide an adhesive tape which allows the control of the splitting force to adapt same to the necessary breaking strength dependable on paper type and weight.

Said object is achieved according to the present invention by an adhesive tape for reel changes having a backing layer and adhesive layers coated on both sides of said backing layer wherein the adhesive tape has a cleavage means provided substantially transverse to at least said backing layer, thereby dividing said backing layer into a first portion and a second portion wherein the one adhesive layer is not effective in the area of the second portion and the other adhesive layer is not effective in the area of the first portion.

It is a further object of the present invention to provide a method for changing a reel, in particular a paper reel, using such an adhesive tape.

In accordance with the invention, said object is achieved by a method for changing a reel, in particular a paper reel, comprising the steps of
- Adhering such an adhesive tape with the one adhesive layer to the new reel to be spliced;
- Adhering the outer spire of the new reel to the other adhesive layer thereby closing the new reel; and
- Adhering the inner spire of the old reel to the other adhesive layer.

Furthermore, it is an object of the present invention to provide an apparatus and a method for measuring splicing tack.

According to the invention, said object is achieved by an apparatus for measuring splicing tack having an upper disk and a lower disk wherein the upper disk is mounted on a shaft of an electrical motor and the lower disk is connected to a pendulum with a rigid but free rotating arm.

Furthermore, said object is achieved according to the invention by a method for measuring splicing tack comprising the following steps:
- applying a tape to a lower disk which is connected to a pendulum having a rigid but free rotating arm;
- applying a paper to an upper disk which is mounted on a shaft of an electrical motor;
- holding the lower disk horizontally at a side opposite to the upper disk; and
- rotating the upper disk at a given speed while releasing the lower disk.

One advantage of the adhesive tape according to the invention consists in that the tape is not restricted to one type of paper quality, but can be adapted by changing the cleavage means, so that the breaking strength can be fitted to the paper types and weights involved to assure a clean splice and hence a fluent breaking of the tape afterwards but not during acceleration of the new reel.

Another advantage consists in that the usage of different types of tapes and thus the problem of the distinctability and the repacking of the different tapes is avoided. It also implies that less difficult preparations have to be made which means that a straight to almost straight splice can be applied instead of the difficult cut-out and splice patterns normally used.

A further advantage of the adhesive tape according to the invention is that the thickness of the total splice zone is reduced significantly thus avoiding air tunnels causing reopening and avoiding splice failures caused by uneven splice patterns.

Preferably, the one adhesive layer is provided only on the first portion of the backing layer. This measure guarantees in an easy manner that the one adhesive layer is effective only in the area of the first portion of the backing layer but not in the area of the second portion of the backing layer.

Furthermore, it is preferable that the other adhesive layer is provided on the first portion and on the second portion of the backing layer, a release liner covers the adhesive layer at least in the area of the first portion of the backing layer, and the cleavage means is provided in the other adhesive layer thereby dividing said adhesive layer in a first and a second portion. This preferred embodiment of the invention guarantees that the other adhesive layer is effective only in the area of the second portion of the backing layer but not in the area of the first portion of the backing layer.

According to a further preferred embodiment, the first portion and the second portion of the other adhesive layer are covered by the release liner, and the cleavage means and a slit are provided in the release liner thereby dividing the release liner in a first, a second and a third portion, the first portion being located in the area of the first portion of the backing layer.

Covering the first and second portions of the other adhesive layer means that the release liner covers the total adhesive zone of the other adhesive layer.

The advantage of this embodiment consists in that it is possible to remove only the third portion of the release liner for closing the reel while the second portion of the release liner still covers the adhesive layer. The second portion of the release liner is removed only shortly before the splice takes place which facilitates the handling of the adhesive tape.

In a further improved embodiment of the invention, the second portion of the adhesive layer comprises a splicing adhesive zone and a reel closing adhesive zone, the splicing adhesive zone being located between the reel closing adhesive zone and the first portion of the adhesive layer, wherein the thickness of the splicing adhesive zone and the thickness of the reel closing adhesive zone are in a range of 50 to 100 µm. The thickness of the splicing adhesive zone can be equal to the thickness of the reel closing adhesive zone.

Preferably, the cleavage means is a perforation which can easily be changed to control the splitting force necessary for breaking the tape. The cleavage means provided in the release liner can be a slit.

The width W of the tape can be in the range of 40 mm to 100 mm. The width W₁ of the first portions of the backing layer, the adhesive layer and the release liner can be in the range of 10 mm to 20 mm. The width W₁ of the one adhesive layer can be in a range of 10 mm to 20 mm. The width W₂ of the third portion of the release liner (6) can be in the range of 10 mm to 20 mm.

The tear strength of the adhesive tape can be in the range of 10 to 30 kg/m. The total product can be repulpable or non-repulpable. The backing layer can be made of a perforated paper backing or film. The paper backing weight can be in the range of 40 to 100 g/m². The film can be a PVC with a thickness of 12 to 75 µm or a PET with a thickness of 12 to 50 µm or an oriented PP with a thickness of 25 to 75 µm or a non-woven type with a grammage of 10 to 25 g/m² or an aluminum based film with a thickness of 12 to 75 µm. The release liner can have a release value being not lower than 10 cN/50 mm and not more than 100 cN/50 mm.

A preferred embodiment of the method according to the invention comprises the steps of
- Removing the third portion of the release liner thereby exposing the reel closing adhesive zone;
- Adhering the outer spire of the new reel to the reel closing adhesive zone thereby closing the reel;
- Removing the waste paper in order to provide a straight clean paper edge; and further the steps
- Removing the second portion of the release liner shortly before the splicing is effected thereby exposing the splicing adhesive zone; and
- Adhering the (almost) inner spire of the old reel to the splicing adhesive zone of the adhesive layer.

According to an embodiment of the apparatus for measuring splicing tack, the electrical motor has a controllable rotating speed. Preferably the upper and lower disks have a diameter of 6cm. The free rotating arm can have a length of 14cm and the pendulum can have a mass of 115g.

The invention will now be described by way of example and with reference to the accompanying drawings in which:
Figure 1 is a cross section of the adhesive tape according to an embodiment of the invention;
Figure 2A shows a new paper reel which is closed with the adhesive tape according to the embodiment of the invention,
Figure 2B shows the closed new paper reel and the adhesive tape according to the embodiment of the invention which is prepared for splicing,
Figure 2C shows the new paper reel during the splicing of its outer spire with the (almost) inner spire of an old paper reel;
Figure 2D shows the new paper reel after the splice has taken place; and
Figure 3 is a schematic illustration of an apparatus for the measurement of a splicing tack according to an embodiment of the invention.

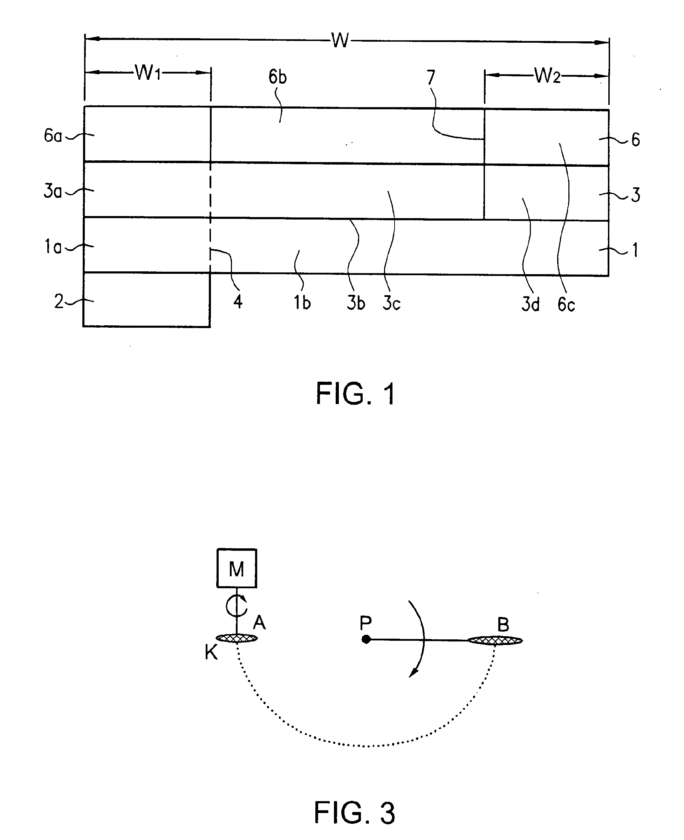

Figure 1 illustrates the composition of an adhesive tape according to a preferred embodiment of the invention. Said adhesive tape comprises a backing layer 1 which is coated on both sides with adhesive layers 2 and 3. In the embodiment shown in Figure 1, the one adhesive layer 2 is provided on the lower side of the backing layer 1 and the other adhesive layer 3 is provided on the upper side of the backing layer 1. A release liner 6 covers the other adhesive layer 3.

It is seen in Figure 1 that a cleavage means 4 is provided substantially transverse to at least the backing layer 1. The cleavage means 4 shown in Figure 1 is also provided in the adhesive layer 3 and the release liner 6. The cleavage means 4 is here realised as a perforation extending transverse to the backing layer 1 and the adhesive layer 3. Said perforation can be made with a flexible dye or a rotary dye. In the release liner 6, the cleavage means 4 is realised as a slit which likewise extends in a transverse direction. Said slit is positioned exactly above the perforation provided in the adhesive layer 3 and the backing layer 1.

The cleavage means 4 defines the plane along which the adhesive tape is separated into two parts after splicing. By changing the perforation widths and distances, the breaking strength of the adhesive tape can be fitted to the paper types and the weights involved to ensure a clean splice which in turn ensures a fluent breaking of the tape after effecting the splice, but not during acceleration of the new paper reel.

Other ways to realise the cleavage means 4 for example by partially providing slits in the adhesive layer 3 and the backing layer 1 are thinkable.

It is further shown in Figure 1 that the perforation divides the backing layer 1 into a first portion 1a and a second portion 1b. It can further be seen that the adhesive layer 2 is not effective in the area of the second portion 1b of the backing layer 1 which is realised in the present embodiment by providing the adhesive layer 2 only in the area of the first portion 1a of the back layer 1. The other adhesive layer 3 is not effective in the area of the first portion 1 a of the backing layer 1 which is realised in the embodiment of Figure 1 by providing the release liner 6 on the adhesive layer 3 at least in the area of the first portion 1 a of the backing portion 1.

The release liner 6 of this embodiment comprises a first portion 6a, a second portion 6b and a third portion 6c. The first portion 6a covers the adhesive layer 3 in the area of the backing layer 1 a and is therefore provided on the first portion 3a of the adhesive layer 3. The second portion 6b and the third portion 6c of the release layer cover the second portion 3b of the adhesive layer 3.

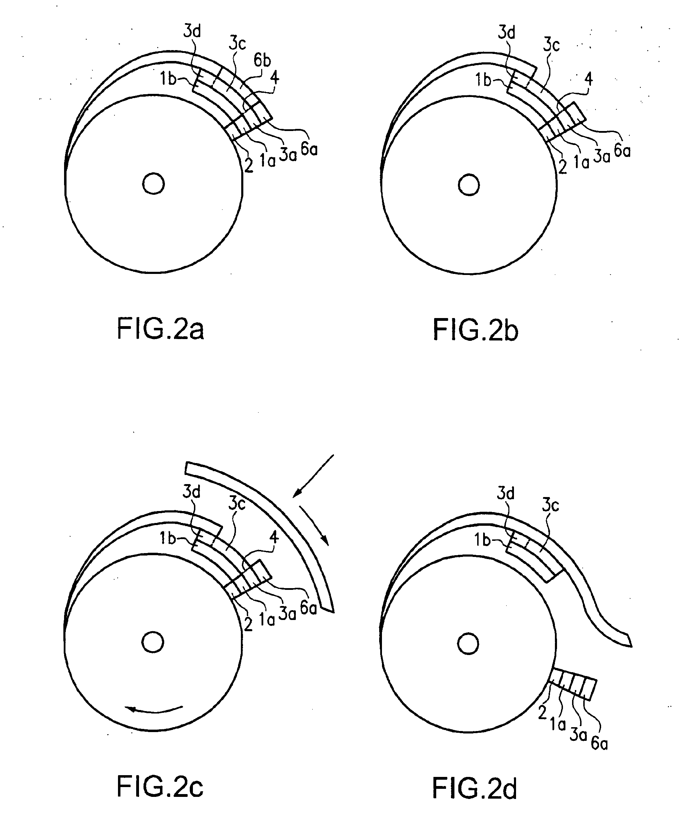

Furthermore, two slits are provided in the release liner 6 which separate the first portion 6a, the second portion 6b and the third portion 6c. The release liner 6 allows to expose the second portion 3b of the adhesive layer 3 by removing the second portion 6b and the third portion 6c of the release liner 6, as can be seen in Figures 2b and 2c.

As shown in Figures 2c and 2d, the function of the first portion 6a of the release liner 6 is to prevent that the inner spire of the old paper reel adheres via the other adhesive layer 3 to the part of the adhesive tape which remains on the new reel when breaking the adhesive tape after the splice has been effected.

The measure to provide the one adhesive layer 2 only in the area of the first portion 1a of the backing layer 1 and hence in this part of the adhesive tape which remains on the new reel allows the separation of the other part of the adhesive tape which is responsible for the splice. This can be seen in Figure 2b.

Other ways to prevent that the one adhesive layer 2 is not effective in the area of the second portion 1 b and the other adhesive layer 3 is not effective in the area of the first portion 1a of the backing layer are likewise thinkable. The other adhesive layer 3 could for example be provided only in the area of the second portion 1b of the backing layer.

The second portion 3b of the adhesive layer 3 comprises a splicing adhesive zone 3c and a reel closing adhesive zone 3d. As can be seen in Figure 1, the splicing adhesive zone 3c is located between the reel closing zone 3c and the first portion 3a of the adhesive layer 3. Furthermore it can be seen in Figure 1 that the second portion 6b of the release layer covers the splicing adhesive zone 3c and the third portion 6c of the release layer 6 covers the reel closing adhesive zone 3d. This arrangement allows to first remove the third portion 6c of the release liner, thereby exposing only the reel closing adhesive zone 3d. This is shown in Figure 2a. The second portion 6b of the release liner 6 can be removed to expose the splicing adhesive zone 3c as shown in Figure 2b. The thickness of the splicing adhesive zone 3c is in the range of 50 to 100µm and the thickness of the reel closing adhesive zone 3d is in the range of 50 to 100µm.

The splicing adhesive zone 3c and the reel closing adhesive zone 3d have both the same thickness.

In the following, a method for changing a reel, in particular a paper reel, according to an embodiment of the invention is described with reference to Figures 2a, 2b, 2c and 2d.

In Figure 2a it is shown that the adhesive tape is adhered with the adhesive layer 2 to the new wheel which is to be spliced. The adhesive layer 2 is automatically exposed while unwinding the adhesive tape.

Then the outer spire of the new reel is adhered to the adhesive layer 3, thereby closing the new reel. This is effected by first removing the third portion 6c of the release liner 6 thereby exposing the reel closing adhesive zone 3d. The outer spire of the new reel is then adhered to the exposed reel closing adhesive zone 3d of the adhesive layer 3. This is effected with sufficient hand pressure to assure a total closure of the new paper reel and without unevenness to avoid air tunnelling. After closure of the new paper reel, the waste paper is removed to assure a straight clean paper edge to avoid flapping of paper during acceleration.

Then the inner spire of the old reel is adhered to the adhesive layer 3. This is effected, as can be seen in Figure 2b by first removing the second portion 6b of the release liner 6 shortly before the splicing is effected, thereby exposing the splicing adhesive zone 3c. Then the new paper reel is brought to the same speed as the old paper reel. The splice is then being made between the inner paper winding of the old reel and the outer spire of the new reel, shown in Figure 2c. After the cleavage has occurred along the perforation or cleavage means 4, one part of the adhesive tape remains on the new reel and the other part adheres to the inner and outer spire of the old and new reel. This is shown in Figure 2d.

Although the present invention is described in connection with paper reels, the use of the adhesive tape for related reels is likewise thinkable.

Figure 3 is a schematic drawing of an embodiment of an apparatus for the measurement of a splicing tack. Said apparatus contains an upper disk (A) and a lower disk (B) each having a diameter of 6cm. The two disks (A,B) are placed horizontally and centered. The upper disk (A) is mounted on a shaft of an electrical motor (M) having a controllable rotating speed. The lower disk (B) is connected to a pendulum (P) with a rigid, but free rotating arm of 14cm length and with a mass of 115g.

The tape to examine is applied to the lower disk (B) with Nitto 500 and Nitto Na-tack n° 144. The paper to examine is applied to the upper disk (A) with Nitto 500 and Nitto Na-tack n° 144 (standard: 80g copy paper).

The upper disk (A) rotates at a given speed, while the lower disk (B) held horizontally at the opposite side, is released.

If the connection is successful, the procedure will be repeated at a speed of 100 rpm higher. Every test is done with fresh tape and paper. The highest speed obtained with a successful splicing is reported.

A splicing tack level is given to a tape. The system is gauged with Nitto R9411 which corresponds to a level 10 and Nitto 5033X which corresponds to a level 5.

## Claims

1. An adhesive tape for flying reel changes having a backing layer (1) and adhesive layers (2, 3) coated on both sides of said backing layer (1)
**characterized by**
a cleavage means (4) provided substantially transverse to at least said backing layer (1), thereby dividing said backing layer (1) into a first portion (1a) and a second portion (1b), wherein the one adhesive layer (2) is not effective in the area of the second portion (2a) and the other adhesive layer (3) is not effective in the area of the first portion (1a).

2. The adhesive tape according to claim 1, wherein the one adhesive layer (2) is provided only on the first portion (1a) of the backing layer (1).

3. The adhesive tape according to claim 1 or 2, wherein
- the other adhesive layer (3) is provided on the first portion (1a) and on the second portion (1b) of the backing layer (1);
- a release liner (6) covers the other adhesive layer (3) at least in the area of the first portion (1a) of the backing layer (1); and
- the cleavage means (4) is provided in the other adhesive layer (3) thereby dividing said adhesive layer (3) in a first and a second portion (3a,3b).

4. The adhesive tape according to claim 3, wherein
- the first portion (3a) and the second portion (3b) of the other adhesive layer (3) are covered by the release liner (6); and
- the cleavage means (4) and a slit (7) are provided in the release liner (6) thereby dividing the release liner (6) in a first, a second and a third portion (6a,6b,6c), the first portion (6a) being located in the area of the first portion (1a) of the backing layer (1).

5. The adhesive tape according to claim 4, wherein the second portion (3b) of the adhesive layer (3) comprises a splicing adhesive zone (3c) and a reel closing adhesive zone (3d), the splicing adhesive zone (3c) being located between the reel closing zone (3d) and the first portion (3a) of the adhesive layer (3), wherein the thickness of the splicing adhesive zone (3c) and the thickness of the reel closing adhesive zone (3d) are in a range of 50 to 100 µm.

6. The adhesive tape according to claim 5, wherein the thickness of the splicing adhesive zone (3c) is equal to the thickness of the reel closing adhesive zone (3d).

7. The adhesive tape according to at least one of the foregoing claims, wherein the cleavage means (4) is a perforation.

8. The adhesive tape according to at least one of the foregoing claims, wherein the cleavage means (4) provided in the release liner (6) is a slit.

9. The adhesive tape according to at least one of the foregoing claims, wherein the width W of the tape is in a range of 40 mm to 100 mm.

10. The adhesive tape according to at least one of the foregoing claims, wherein the width W₁ of the first portions (1a, 3a, 6a) is in a range of 10 mm to 20 mm.

11. The adhesive tape according to at least one of the foregoing claims, wherein the width W₁ of the adhesive layer (2) is in a range of 10 mm to 20 mm.

12. The adhesive tape according to at least one of the foregoing claims, wherein the widths W₂ of the third portion (6c) of the release liner (6) is in a range of 10 mm to 20 mm.

13. The adhesive tape according to at least one of the foregoing claims, wherein the tear strength of said tape is in a range of 10 to 30 kg/m.

14. The adhesive tape according to at least one of the foregoing claims, wherein the total product is repulpable.

15. The adhesive tape according to at least one of the foregoing claims 1 to 13, wherein the total product is not repulpable.

16. The adhesive tape according to at least one of the foregoing claims, wherein the backing layer (1) is made of a perforated paper backing or film.

17. The adhesive tape according to claim 16, wherein the weight of the paper backing (1) is in a range of 40 to 100 g/m².

18. The adhesive tape according to claim 16, wherein the film is
- a PVC with a thickness of 12 to 75 µm or
- a PET with a thickness of 12 to 50 µm or
- an oriented PP with a thickness of 25 to 75 µm; or
- a non-woven type with a grammage of 10 to 25 g/m² or
- an aluminum based film with a thickness of 12 to 75 µm.

19. The adhesive tape according to at least one of claims 3 to 18, wherein the release liner (6) has a release value being not lower than 10 cN/50 mm and not more than 100 cN/50 mm.

20. A method for changing a reel, in particular a paper reel, comprising the steps:
a) adhering an adhesive tape according to at least one of claims 1 to 19 with the adhesive layer (2) to the new reel to be spliced;
b) adhering the outer spire of the new reel to the adhesive layer (3) thereby closing the new reel;
c) adhering the inner spire of the old reel to the adhesive layer (3).

21. The method according to claim 20, wherein step b) comprises the steps:
b1) removing the third portion (6b) of the release liner (6) thereby exposing the reel closing adhesive zone (3d);
b2) adhering the outer spire of the new reel to the reel closing adhesive zone (3d) of the adhesive layer (3);
b3) removing the waste paper in order to provide a straight, clean paper edge; and
wherein step c) comprises the steps:
c1) removing the second portion (6b) of the release liner (6) shortly before the splicing is effected thereby exposing the splicing adhesive zone (3c); and
c2) adhering the (almost) inner spire of the old reel to the splicing adhesive zone (3c) of the adhesive layer (3).

22. An apparatus for the measurement of a splicing tack having an upper disk (A) and a lower disk (B) wherein the upper disk (A) is mounted on a shaft of an electrical motor (M) and the lower disk (B) is connected to a pendulum (P) with a rigid but free rotating arm.

23. The apparatus according to claim 22, wherein the electrical motor has a controllable rotating speed.

24. The apparatus according to claim 22 or 23, wherein the upper and lower disks (A, B) have a diameter of 6cm.

25. The apparatus according to at least one of the foregoing claims 22 to 24, wherein the free rotating arm has a length of 14cm and the pendulum (P) has a mass of 115g.

26. A method for measuring a splicing tack comprising the steps:
- applying a tape to a lower disk (B) which is connected to a pendulum (P) having a rigid but free rotating arm;
- applying a paper to an upper disk (A) which is mounted on a shaft of an electrical motor (M);
- holding the lower disk (B) horizontally at a side opposite to the upper disk (A); and
- rotating the upper disk (A) at a given speed while releasing the lower disk (B).
